# EUROPEAN PATENT APPLICATION

(11) **EP 2 541 161 A2**
(43) Date of publication of application: **02.01.2013**
(21) Application number: 12172972.7
(22) Date of filing: 21.06.2012
(51) Int. Cl.: F24J 2/52, E04D 13/18

(54) **Device for fixing photovoltaic or thermal solar panels to corrugated sheet metal roofing**

(30) Priority: 28.06.2011 IT PD20110218
(71) Applicant: Mollificio Cappeller S.R.L., 36050 Cartigliano (IT); Imeco S.R.L., 32032 Feltre (BL) (IT)
(72) Inventor: Cappeller, Alessandro, 36056 Tezze Sul Brenta VI (IT); Turrin, Matteo, 32032 Feltre (BL) (IT)
(74) Representative: Modiano, Micaela Nadia

(57) **Abstract**

A device (10) for fixing photovoltaic or thermal solar panels to corrugated sheet metal roofing. The device comprises an element (11) made of elastic metal plate which is cut and folded so as to replicate the contour of a main corrugation (12) of a corrugated sheet metal roofing (13); a resting flap (15) for an edge (16) of a solar panel (17) protrudes from each one of the side walls (14) of the element (11) with respect to the drawings that illustrate it. The side walls (14) are preset for connection, by way of mutual engagement means, to a corresponding upper locking means (18) which is adapted to close like a vise the edge (16) of the solar panel (17) against the resting flap (15). At least one between the resting flap (15) and the locking means (18) is elastically deformable.

## Description

The present invention relates to a device for fixing photovoltaic or thermal solar panels to corrugated sheet metal roofing.

As is known, one method used for the installation of solar units on roofs consists in placing side by side a plurality of solar panels on corrugated sheet metal roofing provided with main corrugations, the profile of which has two resting shoulders for edges of a solar panel. According to this conformation, the corrugations define between them seats for accommodating the solar panels, keeping them in the final position for installation with spaced opposite sides. The panels must then be also fixed to the roofing by means of adapted fixing devices.

Some known types of device for fixing panels to corrugated sheet metal are constituted substantially by a bracket, which is arranged above the main corrugation and is provided with a flap on each side which presses the edge of the panel against the resting shoulder of the main corrugation, and by screws for the anchoring of the bracket to the roofing.

These devices have drawbacks, including the fact that they do not adapt sufficiently to the deflection of the panel due to external loads, such as for example the sail effect produced by the wind or the weight of snow, because of the excessively rigid connection to the sheet metal roofing.

Moreover, these devices prevent the lateral expansions of the sheet metal roofing that occur typically because of thermal variations.

Another drawback is due to the fact that a fixing of this type requires long handling times, both during the step of assembly of the solar unit and during maintenance or disassembly.

The aim of the present invention is to solve the above mentioned drawbacks, by providing a fixing device that does not contrast the deflection of the panel and the lateral expansions of the corrugated sheet metal roofing.

Within this aim, an object of the invention is to provide a fixing device that makes it possible to fix easily the panels to the roofing and can be adapted to panels of different thicknesses.

Another object of the invention is to provide a fixing device that can be produced with modest costs.

This aim and these and other objects which will become better apparent hereinafter are achieved by a device for fixing photovoltaic or thermal solar panels to corrugated sheet metal roofing, **characterized in that** it comprises an element made of elastic metal plate which is cut and folded so as to replicate the contour of a main corrugation of a corrugated sheet metal roofing, a resting flap for an edge of a solar panel protruding from each one of the side walls of said element with respect to the drawings that illustrate it, said side walls being preset for connection, by way of mutual engagement means, to a corresponding upper locking means which is adapted to close like a vise said edge of the solar panel against said resting flap, at least one between said resting flap and said locking means being elastically deformable.

Further characteristics and advantages of the invention will become better apparent from the description of five preferred but not exclusive embodiments of the fixing device according to the invention, illustrated by way of non-limiting example in the accompanying drawings, wherein:

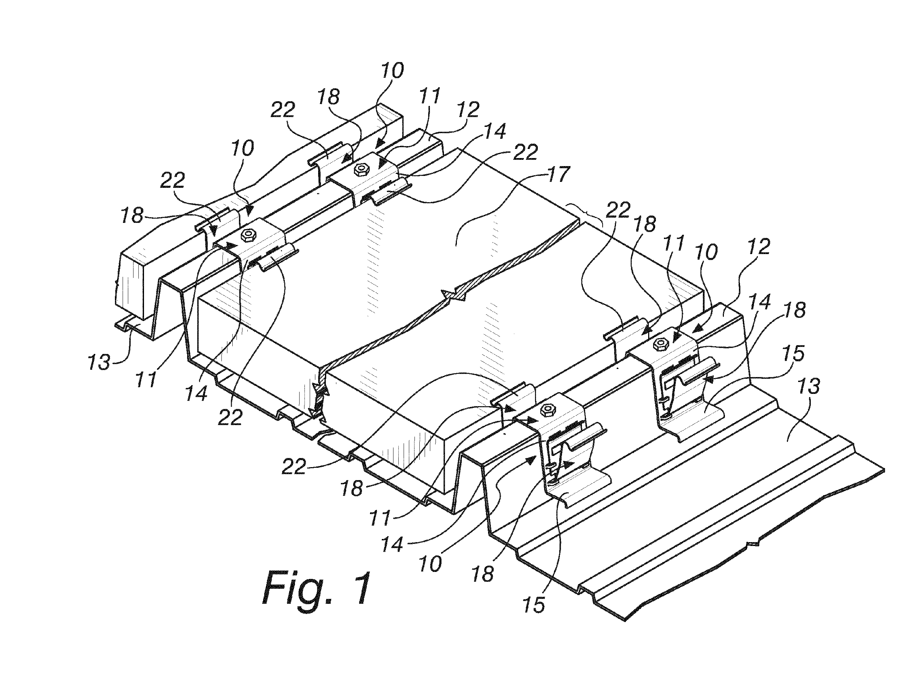

Figure 1 is a perspective view of the device according to the invention in the active configuration, according to a first embodiment;

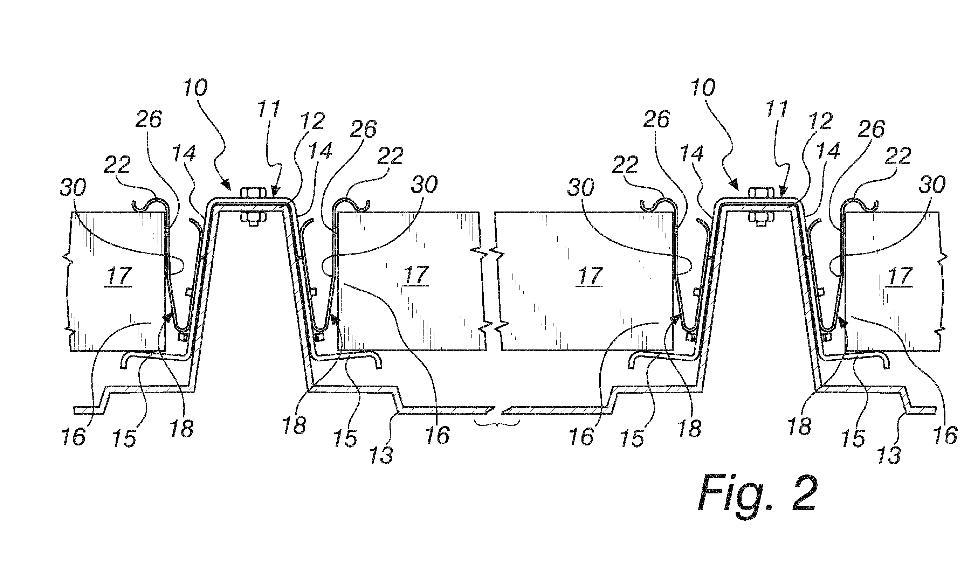

Figure 2 is a front view of the device according to the invention, in the active configuration;

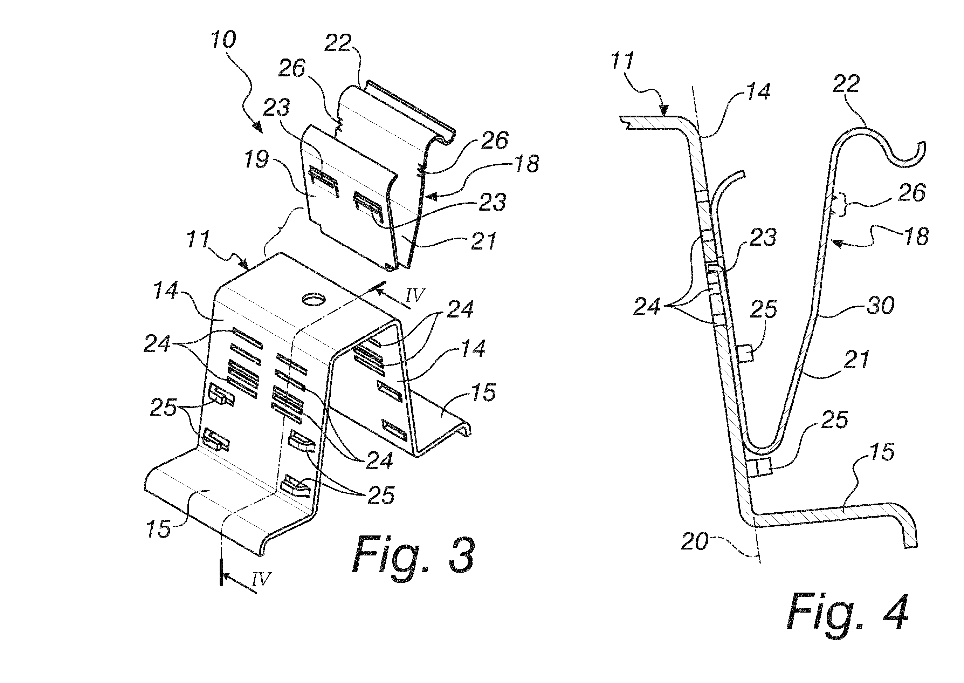

Figure 3 is an exploded perspective view of the device according to the invention;
Figure 4 is an enlarged-scale sectional view of Figure 3, taken along the sectional line IV-IV;
Figure 5 is a perspective view of the device according to the invention in a second embodiment;
Figure 6 is an exploded perspective view of the device according to the invention, according to a third embodiment;
Figure 7 is a side view of the device according to the invention, according to a fourth embodiment;
Figure 8 is a sectional view, taken along a central plane, of the device according to the invention, in the same embodiment shown in Figure 7;
Figures 9 and 10 are views, identical to those of Figures 7 and 8 respectively, of the device according to the invention in a fifth embodiment.

With reference to the figures, the fixing device according to the invention, generally designated by the reference numeral 10 in its first embodiment, comprises an element 11, made of elastic metal plate which is cut and folded so as to replicate the contour of a main corrugation 12 of a corrugated sheet metal roofing 13, which has on both sides a resting flap 15 that is extended downward from each one of its lateral walls 14.

The lateral walls 14 are designed to connect, by way of mutual engagement means, better described hereinafter, with a corresponding locking means 18 that has a substantially V-shaped cross-section.

In accordance with this conformation, the locking means 18 is constituted by an insert which comprises a first wall 19, which mates with the lateral wall 14 along a mating plane 20, and a second wall 21, which faces the edge 16 of the panel 17.

The second wall 21 has in an upper region a protrusion 22 directed toward the panel 17, in order to define a vise-like closure of the edge 16 of the solar panel 17 against the resting flap 15, and a curvature 30 that protrudes toward the edge 16 of the panel.

The protrusion 22 and the resting flap 15 are elastically deformable.

The means for mutual engagement of the insert 18 with the corresponding lateral wall 14 comprise two side-by-side tabs 23, which are defined on the first wall 19 of the insert 18 so as to protrude toward the wall 14, and two corresponding vertical rows of slots 24, on the same lateral wall 14 of the element 11.

The lateral wall 14 is provided, moreover, with guiding lugs 25 for the connected translation of the insert 18.

The insert 18 is provided with anchoring teeth 26, which are arranged on the opposite edges of the second wall 21 and face the edge 16 of the panel 17.

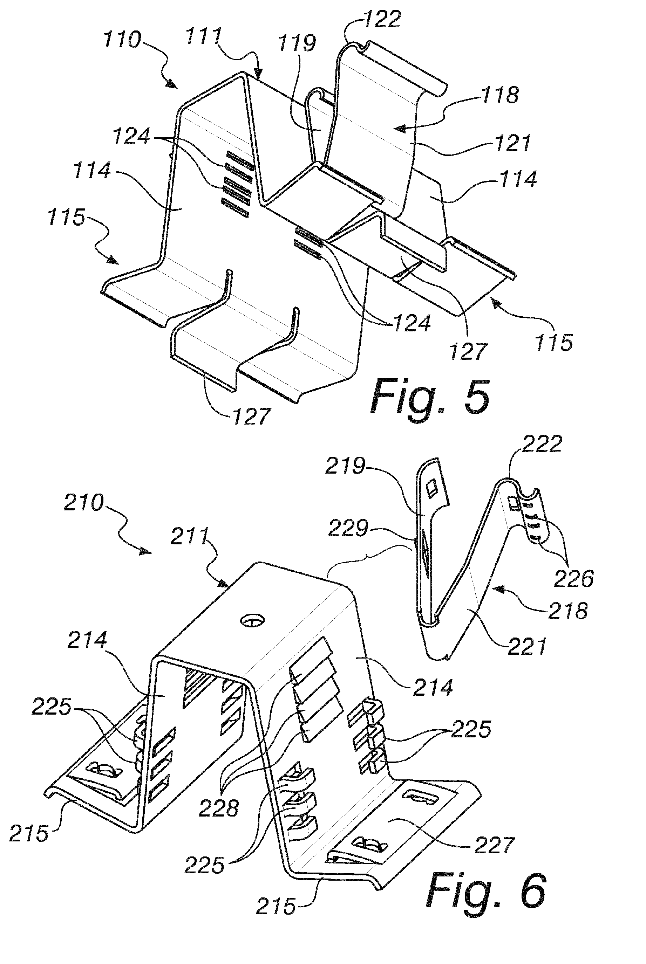

In a second embodiment of the fixing device 110, illustrated in Figure 5, the element 111 has the resting flap 115 divided into three portions, the central portion 127 of which is closer with its free end to the plane of the roofing 13.

Instead, according to a third embodiment of the fixing device 210, illustrated in Figure 6, the mutual engagement means comprise a series of wings 228 defined on each lateral wall 214 and a tab 229 defined on the face of the first wall 219 of the insert 218 that faces the element 211.

Moreover, again according to the third embodiment, the resting flap 215 has an elastically deformable central portion 227, which is extended in a cantilever manner with the free end directed toward the lateral wall 214 and raised with respect to the resting flap 215.

Again according to this embodiment, the anchoring teeth 226 are arranged at the lower face of the protrusion 222.

Use of the device 10 according the invention is as follows.

The use of the described embodiments 110 and 210 is analogous to the above use.

A plurality of elements 11 are arranged at preset distances so as to straddle parallel main corrugations 12 of the roofing 13.

Subsequently, a panel 17 is interposed between two parallel corrugations 12 so that the two opposite edges 16 rest on the flaps 15 of the elements 11.

The insert 18 is pushed from above to translate on the mating plane 20, with respect to the wall 14, until the protrusion 22 closes like a vise the edge 16 of the panel against the resting flap 15.

The translation of the insert is guided by the guiding lugs 25 and its locking in the desired position is ensured by the entry of the tabs 23 in corresponding slots 24 of the series of slots defined on each lateral wall 14 or by the snap engagement of the tabs 229 with the wings 228.

The anchoring teeth 26, by engaging the edge of the panel, cooperate to keep it in its final position, and so do the teeth 226 in the third embodiment.

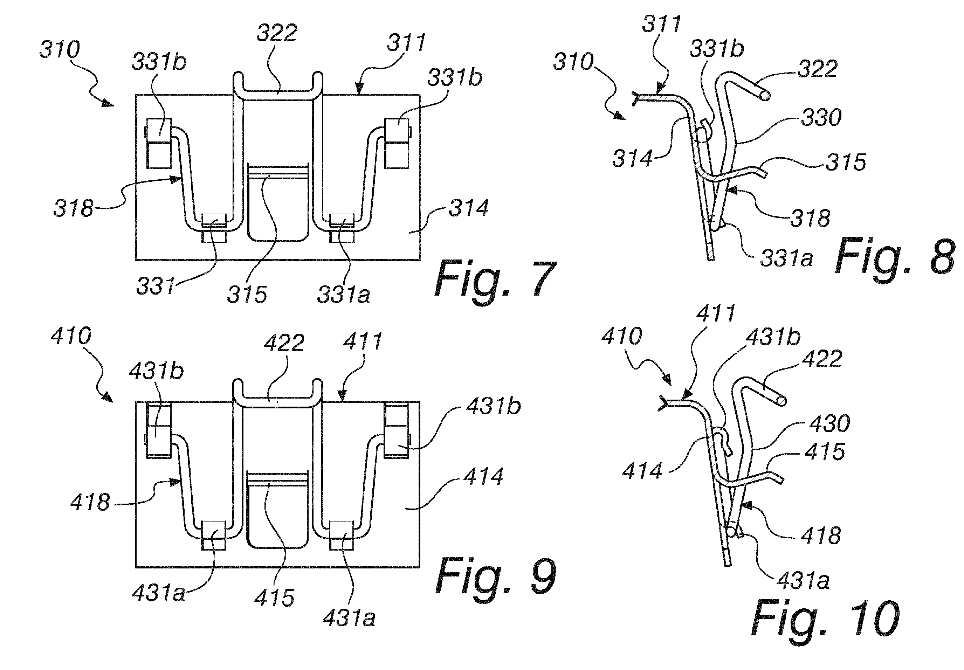

According to a fourth embodiment of a fixing device 310, illustrated in Figures 7 and 8, the locking means 318 is constituted by a contoured wire-like element which generates a protrusion 322, for retaining in position the solar panel 17, which protrudes upward with respect to the element 311 and defines the vise-like closure of the edge 16 of the panel against the resting flap 315.

The wire-like element 318 has, moreover, a protruding curvature 330, which is evident in the side view of Figure 8 and which in the active configuration rests against the edge 16 of the panel.

The resting flap 315 is formed by cutting and subsequent upward folding of a portion of lateral wall 314.

Moreover, on the wall 314 the means for mutual engagement with the wire-like element 318 are provided, which comprise two pairs of anchoring tabs 331a and 331b, also formed by cutting and subsequent folding. In particular, the two lower tabs 331a are folded downward, while the two remaining tabs 331b are folded upward in order to define recesses for retaining the ends of the wire-like element 318.

According to a fifth embodiment of the fixing device 410, illustrated in Figures 9 and 10, the two pairs of tabs 431a and 431b are folded downward. In particular, the tabs 431b define recesses for retaining the ends of the wire-like element 418.

Use of the fixing device, according to the two embodiments 310 and 410 of the invention, is as follows.

After the arrangement of the element 311 astride the main corrugation 12, the wire-like element 318 is inserted from above, at its end portions, in the recesses defined by the two tabs 331b and then is inserted by snap action under the remaining lower tabs 331a.

The protrusion 322 is pulled toward the corrugation 12 in order to facilitate the insertion of the edge 16 of the panel between the flap 315 and the protrusion.

In the use of the fifth embodiment, the wire-like element 418 is associated with the element 411 by insertion from below, under the lower tabs 431a, and at the same time by snap action inside the cavities defined below the remaining two tabs 431b.

As an alternative, the wire-like element 318 or 418 can be associated with the element 311 or 411 in a step that precedes the arrangement of the element 311 or 411 astride the main corrugation 12.

It should be noted that in all the embodiments described above, the resting flap and the protrusion flex elastically, allowing the device to adapt to the deflection of the panel.

Moreover, the presence of elastically deformable elements facilitates the insertion and extraction of the panel, facilitating the operation of installing the unit and any maintenance thereof, besides allowing compensation, by elastic deformation, of the lateral expansions of the corrugation.

Another advantage of the device is due to the possibility, according to the first three embodiments, to insert the insert 18 after the arrangement of the panel 17, allowing its use for panels of different thicknesses.

A further advantage of the device is linked to the second embodiment, in which the portion 127 of the resting flap 115 supports from below the edge of the panel if the load from above to which it is subjected is too high to be carried only by the remaining portions.

The device is preferably made of metallic material in its entirety.

In practice it has been found that the invention fully achieves the intended aim and objects, since by comprising elastically deformable portions it does not prevent the deflections of the panel and the lateral expansions of the corrugated sheet metal roofing.

The invention thus conceived is susceptible of numerous modifications and variations, all of which are within the scope of the appended claims. All the details may furthermore be replaced with other technically equivalent elements.

In practice, the materials used, so long as they are compatible with the specific use, as well as the contingent shapes and dimensions, may be any according to requirements and to the state of the art.

The disclosures in Italian Patent Application No. PD2011A000218 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10, 110, 210, 310, 410) for fixing photovoltaic or thermal solar panels to corrugated sheet metal roofing, **characterized in that** it comprises an element (11, 111, 211, 311, 411) made of elastic metal plate which is cut and folded so as to replicate the contour of a main corrugation (12) of a corrugated sheet metal roofing (13), a resting flap (15, 115, 215, 315, 415) for an edge (16) of a solar panel (17) protruding from each one of the side walls (14, 114, 214, 314, 414) of said element (11, 111, 211, 311, 411) with respect to the drawings that illustrate it, said side walls (14, 114, 214, 314, 414) being preset for connection, by way of mutual engagement means, to a corresponding upper locking means (18, 118, 218, 318, 418) which is adapted to close like a vise said edge (16) of the solar panel (17) against said resting flap (15, 115, 215, 315, 415), at least one between said resting flap (15, 115, 215, 315, 415) and said locking means (18, 118, 218, 318, 418) being elastically deformable.

2. The fixing device according to claim 1, **characterized in that** said locking means (18, 118, 218) comprises an insert which has a substantially V-shaped cross-section, with a first wall (19, 119, 219) which is associated with one of said side walls (14, 114, 214) of said element (11, 111, 211), each one of said side walls (14, 114, 214) defining a mating plane (20, 120, 220) along which said locking means (18, 118, 218) can perform a translational motion with respect to said element (11, 111, 211).

3. The fixing device according to claim 2, **characterized in that** said insert (18, 118, 218) comprises a second wall (21, 121, 221), which has, in an upper region, a protrusion (22, 122, 222) so as to define said vise-like closure against said resting flap (15, 115, 215), and a curvature (30) which protrudes toward said edge (16) and is adapted to prevent the lateral sliding of said solar panel (17) toward said main corrugation (12).

4. The fixing device according to claim 2, **characterized in that** said mutual engagement means comprise at least one engagement tab (23, 123), which is defined on the face of said first wall (19, 119) of said insert (18, 118) that faces said element (11, 111) at said mating plane (20, 120), said at least one tab (23, 123) entering at least one slot (24, 124) provided on each one of said side walls (14, 114) at said mating plane (20, 120).

5. The fixing device according to claim 2, **characterized in that** it comprises lugs (25, 125, 225) for guiding the translational motion of said insert (18, 118, 218), which are defined on each one of said side walls (14, 114, 214) of said element (11, 111, 211) at said mating plane (20, 120, 220).

6. The fixing device according to claim 1, **characterized in that** said resting flap (115) comprises at least one portion (127) which is closer, with its free end, to said roofing (13) than a configuration for use.

7. The fixing device according to claim 2, **characterized in that** said insert (18, 218) has teeth (26, 226) for anchoring to the edge (16) of said panel (17).

8. The fixing device according to claim 1, **characterized in that** said locking means (318, 418) comprises a contoured wire-like element, which is associated with one of said side walls (314, 414) of said element (311, 411), said contoured wire-like element defining, in an upward region, a protrusion (322, 422) for retaining in position said solar panel (17), so as to define said vise-like closure against said resting flap (315, 415), and a curvature (330, 430) which protrudes toward said edge (16) and is adapted to prevent the lateral sliding of said solar panel (17) toward said main corrugation (12).

9. The fixing device according to claim 8, **characterized in that** said mutual engagement means comprise tabs (331, 431) defined on each one of said side walls (314, 414) for anchoring said wire-like element (318, 418) to one of said side walls (314, 414).
